(19) Europäisches Patentamt
European Patent Office
Office européen des brevets

(11) **EP 4 715 343 A1**

(12) **EUROPEAN PATENT APPLICATION**
published in accordance with Art. 153(4) EPC

(43) Date of publication:
25.03.2026 Bulletin 2026/13

(21) Application number: 24806838.9

(22) Date of filing: 01.03.2024

(51) International Patent Classification (IPC):
*G01F 23/292* (2006.01)

(52) Cooperative Patent Classification (CPC):
G01F 23/292

(86) International application number:
PCT/JP2024/007835

(87) International publication number:
WO 2024/236883 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.05.2023 JP 2023081552

(71) Applicant: HITACHI HIGH-TECH CORPORATION
Tokyo 105-6409 (JP)

(72) Inventors:
• SAO Mayu
Tokyo 100-8280 (JP)
• NAKAMURA Yusuke
Tokyo 100-8280 (JP)
• KAKUNO Masahito
Tokyo 105-6409 (JP)
• HORIHATA Fumiyasu
Tokyo 105-6409 (JP)

(74) Representative: Strehl & Partner mbB
Maximilianstrasse 54
80538 München (DE)

(54) **BIOLOGICAL SAMPLE MEASUREMENT DEVICE AND CALIBRATION METHOD**

(57) An object of the present disclosure is to avoid a decrease in liquid height measurement accuracy due to deviation of a measurement device and lens aberration when measuring a biological sample having one or more component regions. A biological sample measurement device according to the present disclosure acquires a distortion coefficient and a liquid height conversion coefficient from a captured image of a calibrator having a pattern shape on a surface thereof, and corrects a liquid height of a sample based on the distortion coefficient and the liquid height conversion coefficient (see Fig. 1).

Fig. 1

## Description

Technical Field

The present disclosure relates to a device for measuring a biological sample separated into a plurality of component regions.

Background Art

For the purpose of improving efficiency in clinical examinations such as blood examinations, there has been a demand for a technology for automating liquid amount confirmation work for a biological specimen before analysis (before dispensing), which has been conventionally performed by visual confirmation. The specimen that is a target is separated into a plurality of layers by centrifugation or the like, and a technology for measuring only a liquid amount of a sample to be analyzed, such as serum or plasma, is required. In addition, in a case where the specimen is a blood sample, a barcode label for patient identification or the like is attached to a blood collection tube containing the specimen, and a technology for enabling measurement in a state in which the label is attached is required. Furthermore, it is desired to mount a specimen measurement device as an option on a specimen transport device or the like already introduced, and it is necessary to downsize the device.

As such a biological sample measurement device, for example, Patent Literature 1 discloses a technology for irradiating a sample separated into a plurality of layers with pulsed light of two wavelengths in a time-division manner and measuring transmitted light while scanning the sample in a vertical direction, thereby detecting a height of a predetermined region of the sample separated into the plurality of layers.

Patent Literature 2 discloses a technology for generating a captured image of a biological sample by using a light source that emits two wavelength components and an area camera and comparing the captured images generated using two or more exposure times or gains at the time of imaging to select a captured image from which a measurement target portion in the biological sample can be most clearly identified.

Citation List

Patent Literature

Patent Literature 1: US 2012/0013889 A
Patent Literature 2: JP 2022-178784 A

Summary of Invention

Technical Problem

The technology disclosed in Patent Literature 1 relates to a liquid amount measurement technology for measuring a liquid amount by accurately specifying a boundary of a measurement target region based on signals of transmitted light of two wavelengths that exhibit different absorption rates with respect to the measurement target for a biological sample including a plurality of components. However, in Patent Literature 1, it is necessary to perform measurement while vertically scanning a specimen (blood collection tube) in a long axis direction, and it is difficult to downsize the device due to a scanning mechanism.

The technology disclosed in Patent Literature 2 relates to a liquid amount measurement technology for acquiring a transmission image of near-infrared light by using the area camera, thereby eliminating the need for sample rotation and a vertical scanning mechanism even for a biological sample to which a label is attached, so that downsizing of the device can be achieved. In this technology, a measurement target region is detected from the transmission image, and a liquid height is obtained to calculate a liquid amount. In this case, a conversion coefficient for converting the number of pixels in the measurement target region into a length is required. Since the conversion coefficient is determined according to a distance from the biological sample to the area camera, it is a problem to avoid an influence of deviation of the device due to installation or the like. In addition, since the image captured using the area camera is distorted due to lens aberration, it is necessary to correct the distortion of the captured image in order to accurately detect the liquid height.

The present disclosure has been made in view of the above problems, and an object of the present disclosure is to avoid a decrease in liquid height measurement accuracy due to deviation of a measurement device and lens aberration when measuring a biological sample having one or more component regions.

Solution to Problem

A biological sample measurement device according to the present disclosure acquires a distortion coefficient and a liquid height conversion coefficient from a captured image of a calibrator having a pattern shape on a surface thereof, and corrects a liquid height of a sample based on the distortion coefficient and the liquid height conversion coefficient.

Advantageous Effects of Invention

With the biological sample measurement device according to the present disclosure, it is possible to avoid a decrease in liquid height measurement accuracy due to deviation of the device and lens aberration when measuring a biological sample having one or more component regions and to improve analysis accuracy.

Brief Description of Drawings

Fig. 1 is a configuration diagram of a biological sample measurement device 101 according to a first embodiment.
Fig. 2A is a diagram for describing a principle of specifying a measurement target region.
Fig. 2B is a diagram for describing the principle of specifying the measurement target region.
Fig. 3A illustrates an example of a calibrator 301.
Fig. 3B illustrates an example of the calibrator 301.
Fig. 4A is a diagram illustrating an example of a pattern 302.
Fig. 4B is a diagram illustrating an example of the pattern 302.
Fig. 5 is a diagram for describing an imaging method for the calibrator 301.
Fig. 6A is an explanatory diagram of a calibrator image 601 obtained by imaging the calibrator 301 having light and dark stripes at regular intervals using the configuration of Fig. 5.
Fig. 6B is a diagram illustrating a distribution of the number [pixel] of stripe interval pixels in a case where there is distortion aberration of a lens in an analysis range 602 of Fig. 6A.
Fig. 7 is a diagram for describing a liquid height conversion coefficient [mm/pixel] obtained by dividing an actual length [mm] of the stripe interval of Fig. 6B by a stripe pitch [pixel].
Fig. 8 is a flowchart illustrating processing of acquiring, by a distortion coefficient calculation unit 109, a distortion coefficient.
Fig. 9 is a flowchart for describing a method of obtaining the liquid height conversion coefficient after performing distortion correction of the calibrator image 601.
Fig. 10 is a flowchart illustrating a method of acquiring the liquid height conversion coefficient as a distribution (function) having a coordinate in a vertical direction as a variable based on the distortion coefficient and a distortion function acquired in Fig. 8.
Fig. 11 is a flowchart illustrating a liquid amount measurement method using the constant liquid height conversion coefficient acquired in Fig. 9.
Fig. 12 is a flowchart illustrating a liquid amount measurement method using a liquid height conversion coefficient distribution acquired by processing in Fig. 10.
Fig. 13 is a configuration diagram of a biological sample measurement device 101 according to a second embodiment.
Fig. 14 is a flowchart illustrating a method of adjusting an imaging position of a biological sample 102 based on a value of a liquid height conversion coefficient.

Description of Embodiments

<First Embodiment>

In an embodiment of the present disclosure, it is assumed that a biological sample to be measured is a specimen to which a label is attached before opening (before analysis), and is separated into a plurality of component layers (typically, one to three layers) depending on whether or not centrifugation is performed. A measurement target is a portion to be analyzed (to be dispensed) by a biochemical analysis device or the like, such as plasma or serum, in the specimen separated into the plurality of layers.

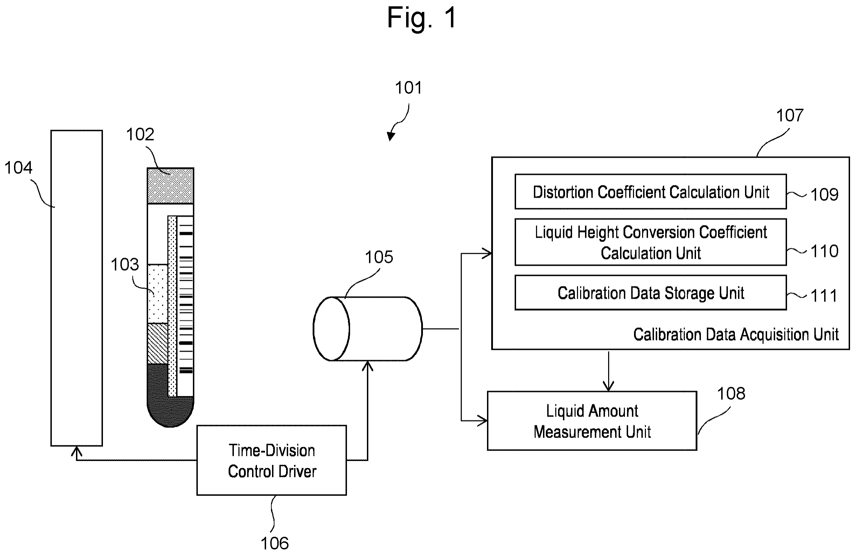

Fig. 1 is a configuration diagram of a biological sample measurement device 101 according to a first embodiment of the present disclosure. The biological sample measurement device 101 is a device that measures a biological sample 102. The biological sample 102 is a sample including a plurality of layers as described above. The biological sample measurement device 101 specifies a measurement target region 103 of the biological sample 102 and measures a liquid amount thereof. The biological sample measurement device 101 includes a surface illumination light source 104, an area camera 105, a time-division control driver 106, a calibration data acquisition unit 107, and a liquid amount measurement unit 108.

The surface illumination light source 104 is configured to be able to switch a wavelength of emitted light between two wavelengths, and illuminates the biological sample 102 with the light. The light emitted from the surface illumination light source 104 can simultaneously illuminate two or more component layers included in the biological sample 102 (that is, across two or more component layers). In addition, an upper surface of the uppermost layer (a boundary between the sample and an air layer) can be irradiated regardless of the component layer. Switching the wavelength of the light does not necessarily mean emitting light having only a single wavelength, and it is sufficient if a wavelength component having the highest intensity can be switched (for example, wavelength $\lambda 1 = 970 \pm 100$ nm and wavelength $\lambda 2 = 1550 \pm 100$ nm). In a case where the number of component layers in the biological sample 102 having one or three component layers is known before measurement, it is sufficient if any one of two wavelengths is used, and it is not necessary to switch the wavelength. The reason and a method of selecting the wavelength are described in a measurement principle described below.

The area camera 105 generates a two-dimensional captured image of the biological sample 102 by imaging surface illumination light transmitted through the biological sample 102. The area camera 105 has a sensitivity characteristic capable of detecting light in a wavelength band emitted from the surface illumination light source 104. The area camera 105 can be implemented by, for example, an InGaAs camera. The area camera 105 acquires a calibrator image. Details of a calibrator are described below.

The time-division control driver 106 switches the wavelength of the light emitted from the surface illumination light source 104 in a time division manner. The time-division control driver 106 adjusts an exposure time (or gain) of the area camera 105 to a time suitable for the wavelength in synchronization with wavelength switching. An imaging timing of the area camera 105 is controlled by the time-division control driver 106 in synchronization with the wavelength emitted by the surface illumination light source 104. The time-division control driver 106 may receive a processing result from the liquid amount measurement unit 108 and control re-imaging according to the result.

The calibration data acquisition unit 107 analyzes the calibrator image acquired by the area camera 105. The calibration data acquisition unit 107 includes a distortion coefficient calculation unit 109, a liquid height conversion coefficient calculation unit 110, and a calibration data storage unit 111. The distortion coefficient calculation unit 109 calculates a distortion coefficient representing image distortion caused by an influence of lens aberration. The liquid height conversion coefficient calculation unit 110 calculates a conversion coefficient for converting the number of pixels in a liquid height region in the image of the biological sample 102 acquired by the area camera 105 into a liquid height [mm]. A method of calculating the distortion coefficient and the liquid height conversion coefficient is described below. The calibration data storage unit 111 stores the distortion coefficient acquired by the distortion coefficient calculation unit 109 and the liquid height conversion coefficient acquired by the liquid height conversion coefficient calculation unit 110.

The liquid amount measurement unit 108 extracts the measurement target region 103 from the captured image acquired by the area camera 105, and acquires the number [pixel] of liquid height pixels in a vertical direction corresponding to the liquid height in the captured image. The liquid amount measurement unit 108 accesses the calibration data storage unit 111 to acquire the stored distortion coefficient and liquid height conversion coefficient, converts the number [pixel] of liquid height pixels acquired from the captured image into the liquid height [mm] by using the acquired distortion coefficient and liquid height conversion coefficient, and further calculates the liquid amount by using information regarding a container diameter of the biological sample 102. Details of processing executed by the liquid amount measurement unit 108 are described below.

<First Embodiment: Principle of Liquid Amount Measurement>

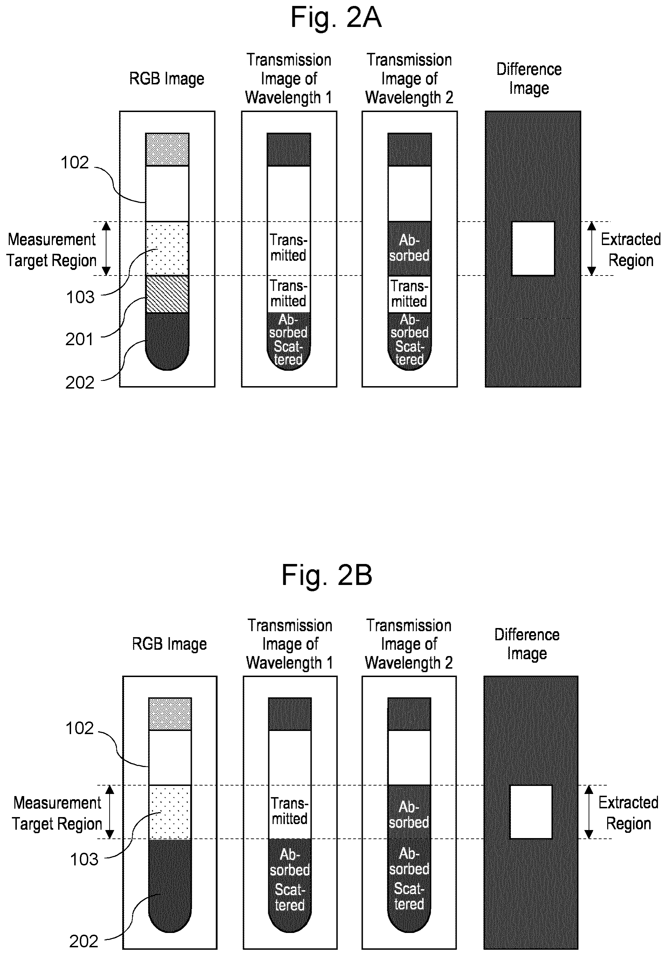

Figs. 2A and 2B are diagrams for describing a principle of specifying the measurement target region. In the configuration of Fig. 1, the area camera 105 captures a two-dimensional transmission image of the biological sample 102 as illustrated in Figs. 2A and 2B.

Fig. 2A illustrates an example in which the biological sample 102 is separated into three layers. Fig. 2B illustrates an example in which the biological sample 102 is separated into two layers. A clot 202 is formed in a lower layer when the biological sample 102 is centrifuged. A separation material 201 is mixed to separate the clot 202 and the measurement target region 103.

Comparing a first wavelength (wavelength 1) and a second wavelength (wavelength 2) emitted from the surface illumination light source 104, a transmittance when the wavelength 1 is transmitted through the clot 202 is substantially the same as a transmittance when the wavelength 2 is transmitted through the clot 202. Therefore, a difference between a captured image of the clot 202 acquired using the wavelength 1 and a captured image of the clot 202 acquired using the wavelength 2 is very small. Similarly, since a transmittance of the wavelength 1 and a transmittance of the wavelength 2 for the separation material 201 are substantially the same as each other, a difference between two images is very small.

On the other hand, a transmittance when the wavelength 1 is transmitted through the measurement target region 103 is greatly different from a transmittance when the wavelength 2 is transmitted through the measurement target region 103. Therefore, a difference between a captured image of the measurement target region 103 acquired using the wavelength 1 and a captured image of the measurement target region 103 acquired using the wavelength 2 is significantly large. By identifying such a difference, the measurement target region 103 can be extracted from the captured image.

As illustrated in Figs. 2A and 2B, wavelength bands to be adopted as the wavelength 1 and the wavelength 2 need to be selected in advance such that a significant difference occurs between the wavelengths for the measurement target region 103, but no difference occurs for other portions. A specific numerical value of the wavelength may be arbitrary as long as this condition is satisfied. That is, at least the difference between the transmittance when the wavelength 1 is transmitted through the measurement target region 103 and the transmittance when the wavelength 2 is transmitted through the measurement target region 103 may be larger than a difference between a transmittance when the wavelength 1 is transmitted through a region other than the measurement target region 103 and a transmittance when the wavelength 2 is transmitted through the region other than the measurement target region 103.

By using the above measurement principle, the measurement target region 103 can be specified in a case where the biological sample 102 is separated into the plurality of component layers. The liquid amount measurement unit 108 specifies the measurement target region 103 according to the principle. The number of component layers is not limited, but a typical biological sample such as plasma or serum is separated into one to three layers. In either case, the measurement target region 103 can be specified with high accuracy.

For the biological sample 102 having one component layer and the biological sample 102 having three component layers, when the number of component layers is known in advance before measurement, measurement can be performed using the transmission image of only one wavelength. When the number of component layers is three as illustrated in Fig. 2A, it is sufficient if a wavelength that exhibits a different absorption rate between the separation material 201 and the air layer positioned above and below the measurement target region 103 and the measurement target region 103 is selected. When the number of component layers is one, it is sufficient if a wavelength that exhibits a different absorption rate between the air layer positioned above the measurement target region 103 and the measurement target region 103 is selected.

The liquid amount measurement unit 108 detects a boundary of the measurement target region 103 acquired as described above to acquire the number of liquid height pixels corresponding to the liquid height, and obtains the liquid height [mm] by using the acquired number of liquid height pixels and the liquid height conversion coefficient [mm/pixel] stored in the calibration data storage unit 111 of Fig. 1. A method of obtaining the liquid height conversion coefficient is described below. The liquid amount measurement unit 108 calculates the liquid amount based on the liquid height [mm] obtained as described above and diameter information of the blood collection tube.

<First Embodiment: Purpose of Calibration>

As described above, in order for the biological sample measurement device 101 to obtain the liquid amount, the liquid height conversion coefficient [mm/pixel] for converting the number of liquid height pixels acquired from the captured image into the liquid height [mm] is required. The liquid height conversion coefficient can be obtained from a field of view [mm] imaged by the area camera 105 and the number of sensor pixels of the area camera 105. In order to obtain the liquid height [mm] with high accuracy, it is necessary to accurately obtain the liquid height conversion coefficient, and there are the following two problems.

The first problem relates to deviation in a distance (working distance) between an imaging position of the biological sample 102 and the area camera 105. The field of view of the area camera 105 is enlarged and reduced according to the working distance, and the liquid height conversion coefficient is also determined according to the working distance. When the imaging position of the biological sample 102 or a position of the area camera 105 is shifted for each device due to installation of the device or the like, the working distance is changed, and the value of the liquid height conversion coefficient is also shifted, which directly leads to a decrease in liquid height [mm] detection accuracy. Therefore, in order to obtain the liquid height conversion coefficient more accurately, it is necessary to perform calibration for obtaining the liquid height conversion coefficient for each individual biological sample measurement device 101.

The second problem relates to image distortion caused by the lens aberration. In the case of imaging with a general lens that is not a telecentric optical system, distortion aberration of the lens causes distortion of the image from the center of the image to an end of the image. In a case where there is such image distortion, the liquid height conversion coefficient changes according to a pixel position as described below in detail. Therefore, in order to obtain an accurate liquid height conversion coefficient, it is necessary to detect the image distortion and correct the liquid height conversion coefficient according to the image distortion. In particular, since the biological sample measurement device 101 measures the liquid height of the measurement target region 103, it is necessary to correct the distortion in a liquid height direction.

In order to solve the above two problems, the calibration described below is performed for each individual biological sample measurement device 101. In the calibration, for the purpose of obtaining the liquid height conversion coefficient with high accuracy, the distortion coefficient representing the image distortion and the liquid height conversion coefficient for calculating and correcting the liquid height based on the distortion coefficient are acquired for each device, and the distortion coefficient and the liquid height conversion coefficient are stored in the calibration data storage unit 111. The liquid amount measurement unit 108 can calculate the liquid height [mm] with high accuracy by acquiring the distortion coefficient and the liquid height conversion coefficient stored in the calibration data storage unit 111 and using the distortion coefficient and the liquid height conversion coefficient in the calculation of the liquid height.

<First Embodiment: Calibration Procedure>

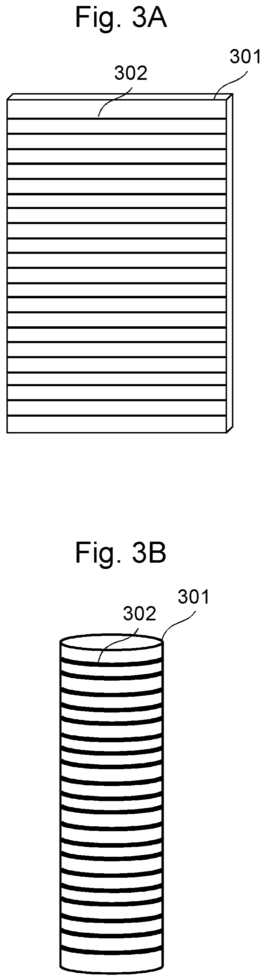

Figs. 3A and 3B illustrate examples of the calibrator 301. The calibration data acquisition unit 107 acquires a captured image of the calibrator 301 captured by the area camera 105 and analyzes a shape pattern formed on a surface of the calibrator 301 to acquire the distortion coefficient and the liquid height conversion coefficient.

The calibrator 301 has a pattern 302 formed on a planar housing as illustrated in Fig. 3A or a cylindrical housing as illustrated in Fig. 3B. The pattern 302 in Fig. 3 is an example in which a black-and-white stripe pattern is formed in the vertical direction. A shape of the calibrator 301 may be a rectangular parallelepiped shape in addition to a flat plate shape or a cylindrical shape, and it is assumed that the pattern 302 is formed on the surface of the housing regardless of the shape. If the shape of the calibrator 301 is the same as or similar to a shape of a container of the biological sample 102, a computation load for calculating the distortion coefficient and the liquid height conversion coefficient can be reduced.

The housing of the calibrator 301 is made of a material that transmits at least one wavelength of the surface illumination light source 104 of the biological sample measurement device 101, such as resin or plastic. The pattern 302 may be directly printed on the housing, or a paper sheet on which the pattern 302 is printed may be attached to the surface of the housing. Alternatively, the pattern 302 may be formed on the housing by an appropriate method. Since the calibration data acquisition unit 107 analyzes a contrast of the pattern 302 acquired by the area camera 105, the pattern 302 has a region that transmits the wavelength of the surface illumination light source 104 and a region that does not transmit the wavelength. By calculating each coefficient using the light transmitted through the calibrator 301, a device setting (a position of an imaging target, an optical configuration, or the like) used when imaging the calibrator 301 can be used as it is also when imaging the sample.

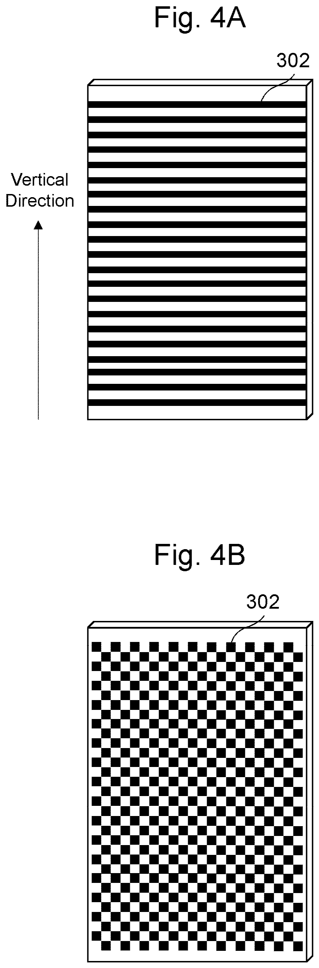

Figs. 4A and 4B are diagrams illustrating examples of the pattern 302. Figs. 3A and 4A are different from each other in a duty ratio of light and dark stripes. The pattern 302 is a stripe pattern of Fig. 4A, a lattice pattern of Fig. 4B, or the like which is a light and dark pattern in the vertical direction. As long as a stripe interval [mm] of the pattern 302 is known, the pattern 302 does not have to be a stripe pattern or a lattice pattern, and a duty ratio of black and white portions may be arbitrary. In a case where a stripe pattern or a lattice pattern in which light and dark portions repeat at equal intervals is used, a computation amount of distortion coefficient acquisition processing executed by the calibration data acquisition unit 107 is small. A random pattern may be used as long as the pattern is a known pattern.

A printing range of the pattern 302 is a range that can cover a region of the biological sample 102 to be imaged in the vertical direction, and the pattern 302 needs to be in a range wider than at least a range of the height of the measurement target region 103. Specifically, in a case where a range of 90 mm in the blood collection tube having a length of 100 mm is imaged by the area camera 105, it is sufficient if the pattern 302 is present in the entire field-of-view range of the area camera 105 in the vertical direction. In a case where a range of the image to be analyzed by the liquid amount measurement unit 108 is narrower than the field-of-view range of the area camera 105, the printing range is adjusted so as to match the analysis range of the liquid amount measurement unit 108, so that the computation amount of the distortion coefficient acquisition processing executed by the calibration data acquisition unit 107 can be reduced.

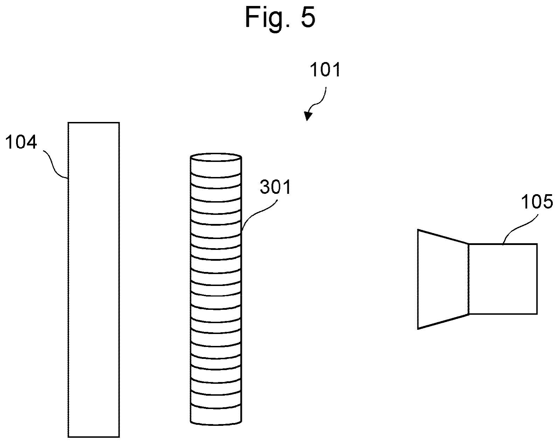

Fig. 5 is a diagram for describing an imaging method for the calibrator 301. The calibrator 301 is disposed so as to be parallel to a lens surface of the area camera 105, and the area camera 105 images transmitted light when the calibrator 301 is irradiated with the light of the surface illumination light source 104. The light with which the calibrator 301 is irradiated may have only one wavelength. In the case of using the surface illumination light source 104 that emits light of two wavelengths such as a wavelength of 970 nm and a wavelength of 1550 nm, the contrast of the pattern 302 can be increased and analyzed with high accuracy by imaging the calibrator 301 using the light of a shorter wavelength (970 nm), which results in reduced blurring due to chromatic aberration.

The arrangement position of the calibrator 301 may be any position as long as a distance from the area camera 105 to the calibrator 301 is known. If the arrangement position of the calibrator 301 is aligned with the imaging position of the biological sample 102, the computation amount when acquiring the distortion coefficient and the liquid height conversion coefficient can be reduced.

<First Embodiment: Method of Correcting Image Distortion Due to Lens Aberration>

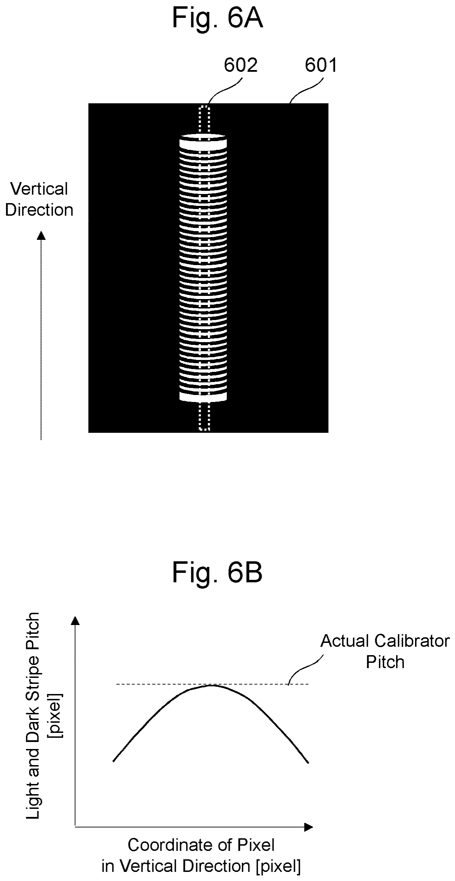

Figs. 6A and 6B are diagrams illustrating the distortion of the captured image. Fig. 6A is an explanatory diagram of a calibrator image 601 obtained by imaging the calibrator 301 having light and dark stripes at regular intervals using the configuration of Fig. 5. Fig. 6B is a diagram illustrating a distribution of the number [pixel] of stripe interval pixels in a case where there is distortion aberration of the lens in an analysis range 602 of Fig. 6A. In Fig. 6B, a horizontal axis represents a coordinate of the calibrator image 601 in the vertical direction, and a vertical axis represents the number of [pixel] stripe interval pixels of the light and dark stripes.

Even in a case where the calibrator 301 in which a stripe interval of a light and dark pattern is constant is imaged, the stripe interval is not constant in a case where there is distortion aberration of the lens, and imaging is performed such that the number of stripe interval pixels decreases toward the end of the image as illustrated in Fig. 6B. Such a distribution of the stripe intervals of the calibrator 301 represents the image distortion.

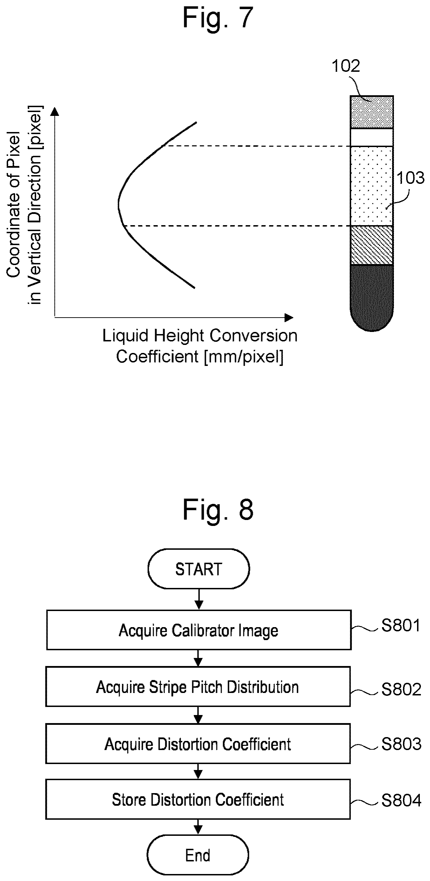

Fig. 7 is a diagram for describing a liquid height conversion coefficient [mm/pixel] obtained by dividing an actual length [mm] of the stripe interval of Fig. 6B by a stripe pitch [pixel]. Since the number of stripe interval pixels is changed due to the image distortion, the liquid height conversion coefficient also exhibits a distribution depending on the coordinate in the vertical direction. That is, the liquid height conversion coefficient varies depending on a liquid level position of the biological sample 102, and if the liquid height conversion coefficient obtained from the stripe pitch at the center of the image is used as it is in conversion of the number of liquid height pixels at the end of the image, accuracy of the liquid height decreases. In order to accurately obtain the liquid height [mm], it is necessary to convert the number of liquid height pixels in consideration of the distributions in Figs. 6B and 7.

The distortion coefficient calculation unit 109 acquires the distortion coefficient representing the distortion as described above. The liquid height conversion coefficient calculation unit 110 acquires the liquid height conversion coefficient based on the distortion coefficient. A specific method is described below.

Fig. 8 is a flowchart illustrating processing of acquiring, by the distortion coefficient calculation unit 109, the distortion coefficient. The calibrator image 601 captured by the area camera 105 is acquired (S801). A stripe pitch distribution in the vertical direction as illustrated in Fig. 6 is acquired from a luminance distribution of the analysis range 602 set in a center region of the image (S802). An influence of noise can be reduced by setting a width of the analysis range 602 to be, at most, approximately equal to a diameter of the blood collection tube and averaging pixel values of the analysis range 602 in a horizontal direction to acquire the stripe pitch distribution. The distortion coefficient for fitting the acquired stripe pitch distribution to a distortion function is acquired (S803). Equation 1 is an example of the distortion function. yd represents the distortion function, y represents the coordinate in the vertical direction, and k1 and k2 represent the distortion coefficients. The distortion coefficient is set so as to minimize an error between Equation 1 and the stripe pitch distribution acquired in S802, and the acquired distortion coefficient is stored in the calibration data storage unit 111 (S804).

Since only distortion in the vertical direction (liquid height direction) affects the accuracy of the liquid height, it is not necessary to consider distortion in the horizontal direction, and the distortion function may be in one direction with the coordinate in the vertical direction as a variable. In a case where the diameter of the blood collection tube is detected as described below, a distortion function in the horizontal direction may be obtained similarly, or the distortion function in the vertical direction may also be used as the distortion function in the horizontal direction. In the case of obtaining only the distortion function in one direction, there is an effect of reducing the computation amount.

[Mathematical Formula 1]

$$\frac{dy_d}{dy} = 1 + 3k_1 y^2 + 5k_2 y^4 \cdots \quad \text{Equation (1)}$$

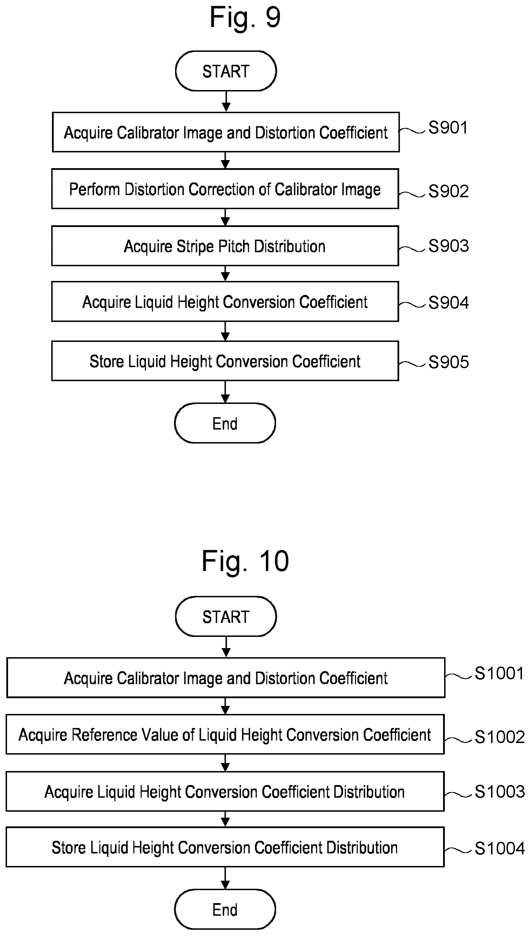

The liquid height conversion coefficient calculation unit 110 acquires the liquid height conversion coefficient based on the distortion coefficient stored in the calibration data storage unit 111. Figs. 9 and 10 are flowcharts for describing the method of obtaining the liquid height conversion coefficient. There are two methods of obtaining the liquid height conversion coefficient in consideration of the image distortion, and the first method is a method of correcting the stripe pitch distribution of Fig. 6B by distortion correction of the calibrator image 601 and then obtaining the constant liquid height conversion coefficient (Fig. 9). The second method is a method of obtaining a liquid height conversion coefficient distribution from the distortion function (Fig. 10).

Fig. 9 is a flowchart for describing a method of performing the distortion correction of the calibrator image 601 and then obtaining the liquid height conversion coefficient. First, the calibrator image 601 and the distortion coefficient stored in the calibration data storage unit 111 are acquired (S901). Next, the pixel interval is increased or decreased according to the distortion function such as Equation 1 defined using the distortion coefficient, thereby performing the distortion correction in the vertical direction of the calibrator image (S902). Subsequently, a light and dark stripe pitch distribution of the calibrator image 601 subjected to the distortion correction is acquired (S903). By the processing of S902, the light and dark stripe pitch distribution in Fig. 6B acquired in S903 becomes flat so as to match an actual calibrator pitch distribution. Finally, an actual calibrator pitch [mm] is divided by a light and dark stripe pitch [pixel] to acquire the constant liquid height conversion coefficient [mm/pixel] (S904), and the constant liquid height conversion coefficient [mm/pixel] is stored in the calibration data storage unit 111 (S905). Although the distortion correction of the calibrator image 601 is performed in S902, the stripe pitch distribution in the vertical direction may be corrected by the distortion function instead of the calibrator image 601.

Fig. 10 is a flowchart illustrating a method of acquiring the liquid height conversion coefficient as a distribution (function) having the coordinate in the vertical direction as a variable based on the distortion coefficient and the distortion function acquired in Fig. 8. First, the calibrator image 601 and the distortion coefficient are acquired (S1001), and a reference value of the liquid height conversion coefficient is acquired using the stripe pitch in the center region or the like of the calibrator image 601 (S1002). Next, the distortion function of Fig. 8 is set based on the distortion coefficient, and the liquid height conversion coefficient distribution in which the reference value of the liquid height conversion coefficient is corrected depending on the coordinate in the vertical direction is acquired using the reciprocal of the distortion function (S1003). The acquired liquid height conversion coefficient distribution is similarly stored in the calibration data storage unit 111 (S1004).

In Figs. 9 and 10, the liquid height conversion coefficient in consideration of the image distortion can be acquired by either method, and either method may be implemented and executed. However, depending on which of Figs. 9 and 10 is executed, a content of the stored liquid height conversion coefficient varies, and a flow of liquid amount measurement processing described below also varies.

The above processing is executed in advance as calibration for each device. When measuring the liquid amount of the biological sample 102, the liquid amount is measured by acquiring the distortion coefficient and the liquid height conversion coefficient stored in the calibration data storage unit 111. As described above, it is possible to avoid the deviation in the working distance due to installation or the like and a decrease in liquid height measurement accuracy due to the image distortion.

<First Embodiment: Liquid Amount Measurement Method>

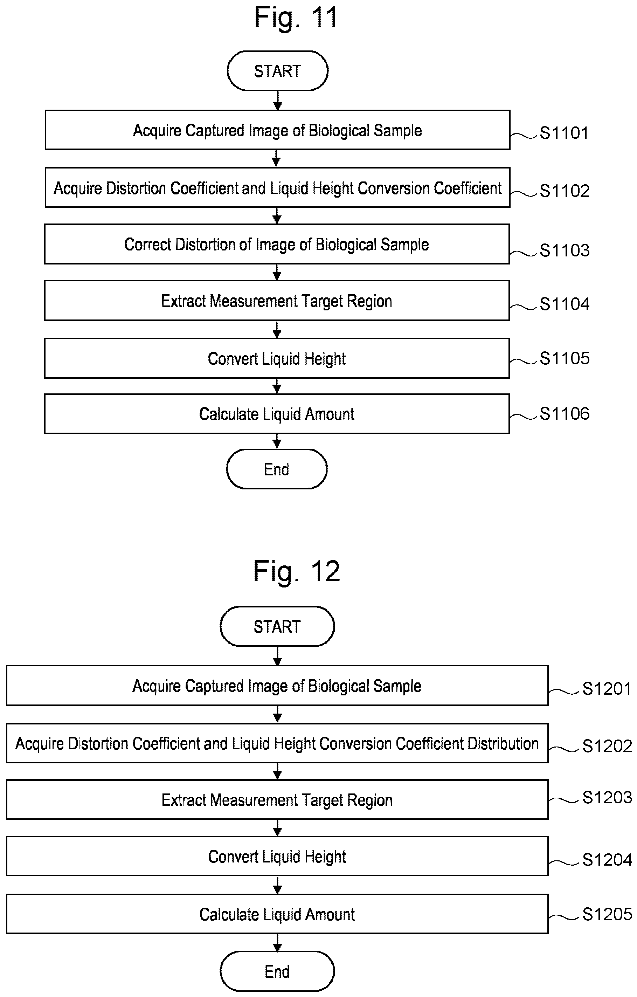

Figs. 11 and 12 are flowcharts for describing processing of measuring, by the liquid amount measurement unit 108, the liquid amount. Fig. 11 illustrates a method using the liquid height conversion coefficient acquired by the method of Fig. 9, and Fig. 12 is a method using the liquid height conversion coefficient distribution acquired by the method of Fig. 10. Depending on the content of the processing (Fig. 9 or 10) executed by the liquid height conversion coefficient calculation unit 110, it is possible to switch between Figs. 11 and 12 to be used.

Fig. 11 is a flowchart illustrating a liquid amount measurement method using the constant liquid height conversion coefficient acquired in Fig. 9. The liquid amount measurement unit 108 acquires the captured image of the biological sample 102 acquired by the area camera 105 (S1101), accesses the calibration data storage unit 111, and acquires the distortion coefficient and the liquid height conversion coefficient (constant) (S1102). Next, the image distortion of the captured image of the biological sample 102 is corrected using the distortion coefficient in the same manner as in S902 of Fig. 9 (S1103). The correction of the image distortion is performed at least in the vertical direction, and in the case of performing detection of the diameter of the blood collection tube described below or the like, the distortion correction in the horizontal direction is also performed similarly to the correction of the calibrator image 601. The measurement target region 103 is extracted by detecting a luminance gradient or the like of the boundary in the image of the biological sample of which the image distortion is corrected based on the principle described in Fig. 2 (S1104). The number of pixels of the extracted measurement target region in the vertical direction is defined as the number of liquid height pixels, and the liquid height [mm] is acquired by multiplying the number of liquid height pixels by the liquid height conversion coefficient acquired in S 1102 (S1105). The liquid amount is calculated using the liquid height [mm] and information regarding the diameter of the blood collection tube (S1106). Blood collection tube information may be acquired by acquiring information regarding the blood collection tube to be used before measurement or may be acquired from the image of the biological sample 102 by a method described below.

In the measurement target region extraction processing (S1104) in Fig. 11, a one-dimensional luminance signal can be acquired by processing such as extracting the center region from the captured image of the biological sample 102 to detect the boundary of the measurement target region 103. In this case, the one-dimensional luminance signal acquisition processing may be executed on an image after the distortion correction output in the biological sample image distortion correction processing (S1103), or the one-dimensional luminance signal acquisition processing may be executed before S1103, and the distortion correction in S1103 may be performed on the acquired one-dimensional luminance signal. The computation amount can be reduced by performing the distortion correction and executing the processing of extracting the measurement target region 103 for the one-dimensional luminance signal.

Fig. 12 is a flowchart for describing a liquid amount measurement method using the liquid height conversion coefficient distribution acquired in the processing of Fig. 10. Unlike the processing of Fig. 11, in the processing of Fig. 12, the distortion correction is not performed on the captured image of the biological sample 102, and the measurement target region is extracted from the captured image acquired in S1201 by processing similar to S1104 of Fig. 11 (S1203). In S1204, the liquid height conversion coefficient corresponding to the coordinate (pixel unit) of the measurement target region detected in S1203 is acquired from the liquid height conversion coefficient distribution acquired in S1202, and the liquid height [mm] is acquired by integrating the liquid height conversion coefficients in the range of the measurement target region in the vertical direction. Similarly to the processing of Fig. 11, in S1203, boundary detection may be performed on the one-dimensional luminance signal. The liquid amount calculation processing of S1205 is similar to that in S1106 in Fig. 11.

Since the image distortion can be corrected by the processing of Figs. 11 and 12, the liquid height can be accurately acquired and the liquid amount can be measured.

<First Embodiment: Use of Diameter of Blood Collection Tube>

Although the deviation in the working distance affecting the value of the liquid height conversion coefficient has been described as affecting the accuracy of the liquid height, the working distance varies depending on the diameter of the blood collection tube in addition to the deviation due to device installation or the like, which affects the liquid height measurement accuracy. For example, in the case of the blood collection tube having a diameter of 13 mm and the case of the blood collection tube having a diameter of 16 mm, the distance from the camera to a surface of the blood collection tube is shifted by 1.5 mm. As a method of avoiding the influence of such deviation, there is a method of preparing the liquid height conversion coefficient corresponding to the diameter of the blood collection tube and selectively using the liquid height conversion coefficient according to the information regarding the diameter of the blood collection tube acquired at the time of measurement.

As a method of acquiring the liquid height conversion coefficient according to the diameter of the blood collection tube, the following is conceivable: (a) preparing the cylindrical calibrator 301 as illustrated in Fig. 3B, which has the same diameter as the diameter of the blood collection tube, for each diameter of the blood collection tube, performing calibration using each calibrator, and acquiring and storing the distortion coefficient and the liquid height conversion coefficient corresponding to the diameter of the blood collection tube; and (b) acquiring the liquid height conversion coefficient increased or decreased according to a ratio of each working distance in consideration of the difference between the diameter of the calibrator 301 and the actual diameter of the blood collection tube, and storing the liquid height conversion coefficient in advance in the calibration data storage unit 111 or acquiring the increased or decreased liquid height conversion coefficient each time when measuring the liquid amount.

In a case where the planar calibrator 301 as illustrated in Fig. 3A is used, the liquid height conversion coefficient obtained from the calibrator 301 is increased or decreased according to a ratio between the working distance when imaging the calibrator 301 and the working distance when imaging the biological sample 102 determined depending on the diameter of the blood collection tube, and is acquired as the liquid height conversion coefficient on the surface of the blood collection tube.

The liquid amount measurement unit 108 acquires the blood collection tube information in order to obtain the liquid amount from the liquid height. The information regarding the blood collection tube may be stored in advance in the liquid amount measurement unit 108, or the diameter of the blood collection tube may be detected for each measurement from the captured image of the biological sample 102. In any case, the diameter of the blood collection tube is acquired at the time of measurement, so that the liquid height conversion coefficient corresponding to the diameter of the blood collection tube can be used. As a method of acquiring the diameter of the blood collection tube from the captured image of the biological sample 102, there is a method of detecting the boundary from a luminance difference between an edge of the blood collection tube and a background to obtain the diameter.

<Second Embodiment>

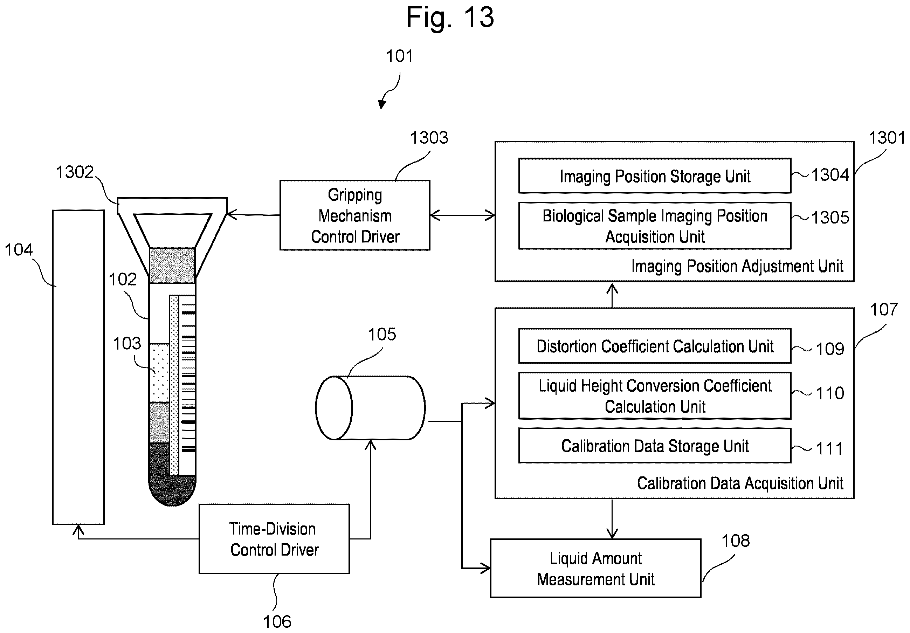

Fig. 13 is a configuration diagram of a biological sample measurement device 101 according to a second embodiment of the present disclosure. In the present embodiment, an imaging position adjustment unit 1301, a gripping mechanism 1302, and a gripping mechanism control driver 1303 are included in addition to the configuration described in the first embodiment. Other configurations are similar to those of the first embodiment.

The gripping mechanism 1302 is a mechanism that grips a biological sample 102 and a calibrator 301. The gripping mechanism control driver 1303 is a driver that controls a position of the gripping mechanism 1302 based on an output result of the imaging position adjustment unit 1301. The imaging position adjustment unit 1301 includes an imaging position storage unit 1304 and a biological sample imaging position acquisition unit 1305. The imaging position storage unit 1304 stores an imaging position of the calibrator 301 and an imaging position of the biological sample 102 acquired by the biological sample imaging position acquisition unit 1305. The biological sample imaging position acquisition unit 1305 acquires information regarding the imaging position of the calibrator 301 stored in the imaging position storage unit 1304 and information regarding a liquid height conversion coefficient stored in a calibration data storage unit, and acquires the imaging position of the biological sample 102 by using the pieces of information.

In Fig. 13, the imaging positions of the calibrator 301 and the biological sample 102 are adjusted using the gripping mechanism 1302, but the imaging positions may also be adjusted by a method in which a jig for fixing bottoms of the biological sample 102 and the calibrator 301, a rail for adjusting a position of the jig, and the like are provided and the position of the jig is controlled by a control driver.

<Second Embodiment: Adjustment of Imaging Positions of Calibrator and Biological Sample>

Since the liquid height conversion coefficient is determined by a working distance, it is necessary to align an imaging position of a surface of a pattern 302 of the calibrator 301 with a position of a measurement surface of the biological sample 102 in order to accurately obtain a liquid height.

In a case where the cylindrical calibrator 301 having the same diameter as a diameter of a blood collection tube to be measured is used, the imaging positions of the calibrator 301 and the biological sample 102 are aligned with each other. The biological sample imaging position acquisition unit 1305 acquires the imaging position of the calibrator 301 stored in the imaging position storage unit 1304, and sends the imaging position of the biological sample 102 to the gripping mechanism control driver 1303.

In a case where the diameter of the calibrator 301 is different from the diameter of the blood collection tube or in a case where a position of a printing surface of the pattern 302 of the calibrator 301 and the position of the measurement surface of the biological sample 102 deviate due to a shape difference when using a plate-shaped calibrator or the like, the biological sample imaging position acquisition unit 1305 acquires an imaging position shifted from the imaging position of the calibrator 301 by the deviation amount, and images the biological sample 102 at the acquired imaging position. As a result, the liquid height can be obtained using a distortion coefficient and the liquid height conversion coefficient that are acquired by calibration as they are. In this case, the liquid height conversion coefficient can be used after being corrected by increasing or decreasing the liquid height conversion coefficient by the method described in the first embodiment.

<Third Embodiment>

In the second embodiment, a method of adjusting an imaging position of a biological sample 102 based on an imaging position of a calibrator 301 has been described. According to this method, a liquid height can be accurately measured using an accurate liquid height conversion coefficient. On the other hand, in a case where positional deviations of an area camera 105 and a gripping mechanism 1302 occur due to installation or the like, a working distance of the biological sample 102 deviates between devices. Since the deviation in the working distance enlarges or reduces a field of view of the area camera 105, a resolution varies between the devices.

In order to solve the problem, in a third embodiment of the present disclosure, the imaging position of the biological sample 102 is adjusted based on a value of the liquid height conversion coefficient acquired by calibration in the configuration of Fig. 13. Therefore, the working distance can be set to be common between the devices.

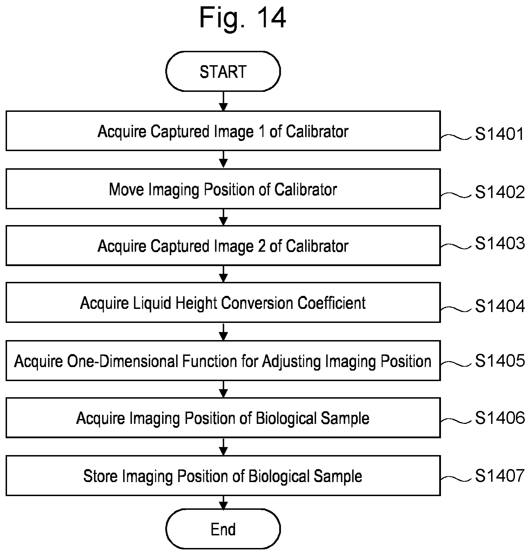

Fig. 14 is a flowchart illustrating a method of adjusting the imaging position of the biological sample 102 based on the value of the liquid height conversion coefficient. First, a captured image 1 of the calibrator 301 is acquired at a first imaging position stored in an imaging position storage unit (S1401). Subsequently, a gripping mechanism control driver 1303 moves the calibrator 301 to a second imaging position stored in the imaging position storage unit (S1402), and acquires a captured image 2 (S1403). The second imaging position is a position shifted from the first imaging position in a depth direction with respect to the area camera 105 (in any one of a positive direction and a negative direction). For each of the captured image 1 and the captured image 2, the liquid height conversion coefficient is acquired by the method of the first embodiment. A method for the acquisition may be either the method of Fig. 9 or the method of Fig. 10. In the case of Fig. 9, a constant liquid height conversion coefficient is acquired, and in the case of Fig. 10, a reference value for obtaining a liquid height conversion coefficient distribution is acquired (S1404). A biological sample imaging position acquisition unit 1305 sets a linear function in which a horizontal axis represents a coordinate of the imaging position and a vertical axis represents the liquid height conversion coefficient based on two acquired liquid height conversion coefficients (or reference values of the liquid height conversion coefficients) and the coordinate of each imaging position (S1405). From the acquired linear function, the coordinate of the imaging position at which the liquid height conversion coefficient common between the devices is obtained is acquired (S1406). The acquired imaging position is stored in an imaging position storage unit 1304 and used when measuring the biological sample 102. By performing the above procedure at the time of calibration for each device, the biological sample 102 can be imaged at the common working distance (and the common liquid height conversion coefficient) between the devices.

As an effect of imaging at the common working distance, the devices can perform imaging at the same resolution, and defocusing of a lens due to the deviation in the working distance can be reduced.

<Modified Examples of Present Disclosure>

The present disclosure is not limited to the above-described embodiments and includes various modified examples. For example, the above-described embodiments have been described in detail for easy understanding of the present invention, and the present invention is not necessarily limited to those having all the described configurations. Further, a part of a configuration of one embodiment can be replaced with a configuration of another embodiment, and a configuration of an embodiment can be added to a configuration of another embodiment. In addition, it is possible to perform addition, deletion, and replacement of other configurations for a part of a configuration of each embodiment.

The calibration according to the first embodiment may be performed for each device at the time of installation of the device or the like, or may be performed using the calibrator 301 for each measurement.

In the first embodiment, the specific configuration (serum sample) of the biological sample 102 is assumed, and the specific example of the wavelength used to obtain the transmission image has been described. The present disclosure is not limited thereto and can be applied to other types of samples. That is, the present disclosure can be applied to other samples by appropriately selecting the wavelength for obtaining the transmission image as exemplified in Figs. 2A and 2B based on an absorbance characteristic of the sample.

The calibration data acquisition unit 107, the liquid amount measurement unit 108, and the imaging position adjustment unit 1301 can be implemented by hardware such as a circuit device having functions thereof, or can be implemented by executing software having the functions thereof using a computation device such as a central processing unit (CPU).

In the above embodiments, the calibrator 301 can be a component of the biological sample measurement device 101 or can be implemented as a member different from the biological sample measurement device 101.

In the above embodiments, the procedure of calculating the distortion coefficient and the liquid height conversion coefficient is not necessarily performed when measuring the biological sample 102, and for example, the procedure may be performed in advance before measuring the biological sample 102, and a result thereof may be held in the biological sample measurement device 101.

Reference Signs List

| | |
|---|---|
| 101 | Biological sample measurement device |
| 104 | Surface illumination light source |
| 105 | Area camera |
| 106 | Time-division control driver |
| 107 | Calibration data acquisition unit |
| 108 | Liquid amount measurement unit |
| 301 | Calibrator |
| 1301 | Imaging position adjustment unit |

**Claims**

1.    A biological sample measurement device that measures a biological sample having one or more component regions, the biological sample measurement device comprising:

an imaging unit that is configured to generate a first captured image of the biological sample by using light transmitted through the biological sample and generate a second captured image of a calibrator having a pattern shape formed on a surface of the calibrator by using transmitted light transmitted through the calibrator;
a distortion coefficient calculation unit that calculates a distortion coefficient for correcting distortion of an image captured by the imaging unit by using the second captured image;
a conversion coefficient calculation unit that calculates a conversion coefficient for converting a number of pixels in the image captured by the imaging unit into a length by using the distortion coefficient; and
a liquid amount measurement unit that measures a liquid height of the biological sample by applying the conversion coefficient to the first captured image.

2.    The biological sample measurement device according to claim 1, wherein

the liquid amount measurement unit is configured to specify a target portion to be measured in the biological sample from the captured image of the biological sample,
the imaging unit generates a third captured image of the biological sample by using a first wavelength component of the light transmitted through the biological sample,
the imaging unit generates a fourth captured image of the biological sample by using a second wavelength component of the light transmitted through the biological sample,
the liquid amount measurement unit specifies an amount caused by a difference between a portion generated using the first wavelength component in the third captured image and a portion generated using the second wavelength component in the fourth captured image, and

the liquid amount measurement unit specifies a portion where the specified amount is equal to or more than a threshold to specify a range of the target portion.

3. The biological sample measurement device according to claim 1, wherein the pattern shape includes a plurality of shapes arranged in a liquid height direction of the biological sample.

4. The biological sample measurement device according to claim 1, further comprising a light source that irradiates the calibrator and the biological sample with first light having a first wavelength component or second light having a second wavelength component,

   wherein the light source irradiates the calibrator with light having a shorter wavelength among the first light and the second light, and
   the imaging unit generates the second captured image by using the light transmitted through the calibrator.

5. The biological sample measurement device according to claim 1, wherein

   the conversion coefficient calculation unit calculates the conversion coefficient for each position of the biological sample in a liquid height direction, and
   the liquid amount measurement unit measures the liquid height of the biological sample by applying the conversion coefficient corresponding to a position in the liquid height direction of the first captured image.

6. The biological sample measurement device according to claim 1, wherein

   the pattern shape includes a plurality of shapes periodically arranged in a liquid height direction of the biological sample,
   the distortion coefficient calculation unit acquires a pitch of the pattern shape in the second captured image for each position in the liquid height direction,
   the distortion coefficient calculation unit obtains a distortion function representing the distortion by performing function fitting on the pitch of the pattern shape acquired from the second captured image, and
   the distortion coefficient calculation unit uses a parameter included in the distortion function as the distortion coefficient.

7. The biological sample measurement device according to claim 1, wherein

   the conversion coefficient calculation unit corrects the distortion of the second captured image by using the distortion coefficient, and
   the conversion coefficient calculation unit calculates the conversion coefficient by dividing an actual size of the pattern shape of the calibrator by a number of pixels of the pattern shape included in the corrected second captured image.

8. The biological sample measurement device according to claim 1, wherein

   the distortion coefficient calculation unit calculates the distortion coefficient for the distortion that depends on a position of the biological sample in a liquid height direction,
   the conversion coefficient calculation unit acquires a reference value of the conversion coefficient by dividing an actual size of the pattern shape of the calibrator by a number of pixels of the pattern shape included in the second captured image at a reference position of the second captured image, and
   the conversion coefficient calculation unit calculates the conversion coefficient that changes depending on the position in the liquid height direction by applying a function constructed using the distortion coefficient to the reference value.

9. The biological sample measurement device according to claim 1, wherein

   the liquid amount measurement unit corrects the distortion of the first captured image by using the distortion coefficient, and
   the liquid amount measurement unit measures the liquid height of the biological sample by applying the conversion coefficient to the corrected first captured image.

**10.** The biological sample measurement device according to claim 8, wherein the liquid amount measurement unit measures the liquid height of the biological sample by applying a value corresponding to a position in the liquid height direction of the first captured image among the conversion coefficients calculated for the respective positions in the liquid height direction.

**11.** The biological sample measurement device according to claim 1, wherein

the conversion coefficient calculation unit calculates the conversion coefficient for each size of a container containing the biological sample by using the second captured image of each of a plurality of the calibrators having different sizes for each size of the container, or
the conversion coefficient calculation unit increases or decreases the conversion coefficient obtained from the second captured image according to a ratio between a working distance when the imaging unit captures the second captured image and a working distance when the imaging unit captures the first captured image.

**12.** The biological sample measurement device according to claim 1, further comprising a position adjustment unit that adjusts a position of a target to be imaged by the imaging unit,
wherein the position adjustment unit adjusts a position of the biological sample such that a position of the pattern shape when the second captured image used to calculate the distortion coefficient and the conversion coefficient is captured and a position of a measured surface of the biological sample when the first captured image to which the distortion coefficient and the conversion coefficient are applied is captured become same as each other.

**13.** The biological sample measurement device according to claim 1, further comprising a position adjustment unit that adjusts a position of a target to be imaged by the imaging unit,

wherein the imaging unit captures an image of the calibrator when the calibrator is positioned at a first position,
the imaging unit captures an image of the calibrator when the calibrator is positioned at a second position different from the first position in a depth direction,
the conversion coefficient calculation unit calculates a first coefficient at the first position and a second coefficient at the second position as the conversion coefficients,
the conversion coefficient calculation unit calculates a function representing a relationship between a position of the calibrator and the conversion coefficient by using the first coefficient and the second coefficient,
the conversion coefficient calculation unit specifies a pair of the conversion coefficient and a position of the biological sample to be used in common for each individual biological sample measurement device based on the relationship described by the function, and
the position adjustment unit positions the biological sample at a position specified by the pair, and the liquid amount measurement unit uses the conversion coefficient specified by the pair.

**14.** The biological sample measurement device according to claim 1, wherein a container containing the biological sample and the calibrator have an identical shape or a similar shape.

**15.** A calibration method of calibrating a biological sample measurement device that measures a biological sample having one or more component regions, the method comprising:

generating a captured image of a calibrator having a pattern shape formed on a surface of the calibrator by using transmitted light transmitted through the calibrator;
calculating a distortion coefficient for correcting distortion of an image captured by the biological sample measurement device by using the captured image; and
calculating a conversion coefficient for converting a number of pixels in the image captured by the biological sample measurement device into a length by using the distortion coefficient.

Fig. 1

101

107 — Distortion Coefficient Calculation Unit — 109
Liquid Height Conversion Coefficient Calculation Unit — 110
Calibration Data Storage Unit — 111
Calibration Data Acquisition Unit

108 — Liquid Amount Measurement Unit

105

106 — Time-Division Control Driver

102

103

104

# Fig. 2A

# Fig. 2B

## Fig. 3A

## Fig. 3B

## Fig. 4A

302

Vertical
Direction

## Fig. 4B

302

Fig. 5

# Fig. 6A

# Fig. 6B

# Fig. 7

# Fig. 8

# Fig. 9

START

Acquire Calibrator Image and Distortion Coefficient ～S901

Perform Distortion Correction of Calibrator Image ～S902

Acquire Stripe Pitch Distribution ～S903

Acquire Liquid Height Conversion Coefficient ～S904

Store Liquid Height Conversion Coefficient ～S905

End

# Fig. 10

START

Acquire Calibrator Image and Distortion Coefficient ～S1001

Acquire Reference Value of Liquid Height Conversion Coefficient ～S1002

Acquire Liquid Height Conversion Coefficient Distribution ～S1003

Store Liquid Height Conversion Coefficient Distribution ～S1004

End

# Fig. 11

START

| Acquire Captured Image of Biological Sample | S1101 |
| Acquire Distortion Coefficient and Liquid Height Conversion Coefficient | S1102 |
| Correct Distortion of Image of Biological Sample | S1103 |
| Extract Measurement Target Region | S1104 |
| Convert Liquid Height | S1105 |
| Calculate Liquid Amount | S1106 |

End

# Fig. 12

START

| Acquire Captured Image of Biological Sample | S1201 |
| Acquire Distortion Coefficient and Liquid Height Conversion Coefficient Distribution | S1202 |
| Extract Measurement Target Region | S1203 |
| Convert Liquid Height | S1204 |
| Calculate Liquid Amount | S1205 |

End

# Fig. 13

EP 4 715 343 A1

## Fig. 14

```
        ┌──────────────┐
        │    START     │
        └──────┬───────┘
               ▼
┌──────────────────────────────────────────┐
│   Acquire Captured Image 1 of Calibrator  │ ── S1401
└──────────────────┬───────────────────────┘
                   ▼
┌──────────────────────────────────────────┐
│      Move Imaging Position of Calibrator  │ ── S1402
└──────────────────┬───────────────────────┘
                   ▼
┌──────────────────────────────────────────┐
│   Acquire Captured Image 2 of Calibrator  │ ── S1403
└──────────────────┬───────────────────────┘
                   ▼
┌──────────────────────────────────────────┐
│   Acquire Liquid Height Conversion Coefficient │ ── S1404
└──────────────────┬───────────────────────┘
                   ▼
┌──────────────────────────────────────────────────────┐
│ Acquire One-Dimensional Function for Adjusting Imaging Position │ ── S1405
└──────────────────┬───────────────────────────────────┘
                   ▼
┌──────────────────────────────────────────┐
│   Acquire Imaging Position of Biological Sample │ ── S1406
└──────────────────┬───────────────────────┘
                   ▼
┌──────────────────────────────────────────┐
│   Store Imaging Position of Biological Sample │ ── S1407
└──────────────────┬───────────────────────┘
                   ▼
        ┌──────────────┐
        │     End      │
        └──────────────┘
```

24

## INTERNATIONAL SEARCH REPORT

| International application No. |
|---|
| **PCT/JP2024/007835** |

**A.    CLASSIFICATION OF SUBJECT MATTER**

*G01F 23/292*(2006.01)i
FI:    G01F23/292 Z; G01F23/292 A

According to International Patent Classification (IPC) or to both national classification and IPC

**B.    FIELDS SEARCHED**

Minimum documentation searched (classification system followed by classification symbols)

G01F23/292; G01N35/00-35/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2022/174239 A1 (SIEMENS HEALTHCARE DIAGNOSTICS INC.) 18 August 2022 (2022-08-18) paragraphs [0043], [0068], [0070] | 1-15 |
| A | CN 110287953 A (HUBEI JIUGAN TECH CO., LTD.) 27 September 2019 (2019-09-27) paragraphs [0034]-[0036] | 1-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/007835**

| Patent document cited in search report | | | Publication date (day/month/year) | Patent family member(s) | | | Publication date (day/month/year) |
|---|---|---|---|---|---|---|---|
| WO | 2022/174239 | A1 | 18 August 2022 | JP 2024-506649 A paragraphs [0033], [0058], [0060] EP 4292049 A1 CN 116917939 A | | | |
| CN | 110287953 | A | 27 September 2019 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120013889 A

- JP 2022178784 A